# EUROPEAN PATENT APPLICATION

(11) **EP 4 383 656 A1**
(43) Date of publication of application: **12.06.2024**
(21) Application number: 22872051.2
(22) Date of filing: 22.09.2022
(51) Int. Cl.: H04L 12/46

(54) **NETWORK TRANSMISSION METHOD AND DEVICE**

(30) Priority: 23.09.2021 CN 202111112878
(71) Applicant: Huawei Technologies Co., Ltd., Shenzhen, Guangdong 518129 (CN)
(72) Inventor: LI, Jingtang, Shenzhen, Guangdong 518129 (CN); CHEN, Ying, Shenzhen, Guangdong 518129 (CN); LIU, Xiaobin, Shenzhen, Guangdong 518129 (CN)
(74) Representative: Goddar, Heinz J.
(86) International application number: PCT/CN2022/120491
(87) International publication number: WO 2023/046006

(57) **Abstract**

This application provides a network transmission method and device. The method includes: A first optical line terminal OLT may receive, by using a dynamic host configuration protocol DHCP message, an IP address assigned by a DHCP server to the first optical line terminal OLT and an IP address of a peer second OLT device, and may generate a corresponding tunnel packet based on an indication message in the DHCP message. A source address and a destination address of the tunnel packet are respectively an IP address of the first OLT and an IP address of the second OLT. Therefore, the first OLT device and the second OLT device can communicate with each other across an intermediate network, network devices are deployed more flexibly, and a networking capability is enhanced.

## Description

This application claims priority to Chinese Patent Application No. 202111112878.0, filed with the China National Intellectual Property Administration on September 23, 2021, and entitled "NETWORK TRANSMISSION METHOD AND DEVICE", which is incorporated herein by reference in its entirety.

### TECHNICAL FIELD

This application relates to the communication field, and more specifically, to a network transmission method and device.

### BACKGROUND

As a network scale continuously increases, a user imposes an increasingly high requirement on a bandwidth and reliability of a backbone link. In the conventional technology, a bandwidth is increased usually by changing a high-rate interface board or a device that supports the high-rate interface board. However, in this solution, high costs need to be paid, and this solution is not flexible enough. In a link aggregation technology, a plurality of physical ports are bound to form one logical interface, so as to increase a link bandwidth, without upgrading hardware.

Aggregation management may mean that an optical line terminal (optical line terminal, OLT) device deployed in a central office serves as a master device and is directly connected to an optical network unit through an optical fiber. The optical network unit serves as a remote small-capacity slave device, and no longer serves as an independent network element. In other words, a management internet protocol (internet protocol, IP) address is no longer assigned to the optical network unit, and the optical network unit is directly managed by the master device. The slave device may be considered as a service board deployed at a remote end on the master device. A functional feature of the slave device is the same as that of the service board on the master device.

It can be learned from the foregoing descriptions that, in the foregoing aggregation management solution, the master device and the slave device are directly connected through an optical fiber, and cannot communicate with each other across an IP network, and network devices are deployed inflexibly.

### SUMMARY

This application provides a network transmission method and device. An IP address of a first OLT device and an IP address of a second OLT device are sent to the first OLT device by using a DHCP message, and a communication tunnel may be established between the first OLT device and the second OLT, so that the first OLT device and the second OLT device can communicate across an intermediate network, network devices are deployed more flexibly, and a networking capability is enhanced.

According to a first aspect, a network transmission method is provided. The method includes: A first optical line terminal OLT device receives a dynamic host configuration protocol DHCP message from a second OLT device. The DHCP message includes a first internet protocol IP address and a second IP address, the first IP address is an address assigned by a DHCP server to the first OLT device, the second IP address is an address of the second OLT device, the DHCP message further includes an indication message, and the indication message indicates a tunnel packet type. The first OLT device generates a corresponding first tunnel packet based on the indication message. A source address of the first tunnel packet is the first IP address, and a destination address of the first tunnel packet is the second IP address.

Based on the technical solution, in this application, a communication tunnel may be established between the first OLT device and the second OLT by using the DHCP message to carry the IP address, so that the first OLT device and the second OLT device can communicate with each other cross an intermediate network, network devices are deployed more flexibly, and a networking capability is enhanced.

It should be noted that in this application, the first OLT device may also be understood as a slave device, and the second OLT device may also be understood as a master device.

It should be noted that the technical solution of this application is also applicable to transmission between routers, transmission between servers, or the like.

In a possible implementation, an option field of the DHCP message includes a third IP address and a fourth IP address, a payload part of the first tunnel packet includes management data, a source address of the payload part is the third IP address, and a destination address of the payload part is the fourth IP address.

Based on the technical solution, in this application, a data payload part of a generated tunnel packet may further include management data. For example, a source address of the management data is the third IP address, and a destination address of the management data is the fourth IP address. In this case, if a management packet is exchanged between the first OLT device and the second OLT, the management type packet may be encapsulated into a tunnel packet, to improve communication security. In addition, the first OLT device and the second OLT device may exchange a management packet based on an IP address of the management data, and the first OLT device and the second OLT device may be managed across an IP network.

In addition, in this application, the second OLT may automatically discover the first OLT by using the DHCP message, and the first OLT device obtains a management parameter (for example, the third IP address, the fourth IP address, and a VLAN) from the second OLT, without requiring a third-party device (for example, a cloud server) or a manual onsite configuration. This is more convenient and flexible, and reduces costs.

In a possible implementation, a data payload part of the first tunnel packet includes service data, a source address of the payload part is an IP address of a device that initiates the service data, and a destination address of the payload part is an IP address of a service server corresponding to the service data.

In a possible implementation, the method further includes: The first OLT device receives a second tunnel packet from the second OLT device. A source address of the second tunnel packet is the second IP address, and a destination address of the second tunnel packet is the first IP address. The first OLT device decapsulates the second tunnel packet, to obtain a payload part of the second tunnel packet. The first OLT device resolves the payload part of the second tunnel packet if a destination address of the payload part of the second tunnel packet is an IP address of the first OLT device; or the first OLT device forwards the payload part of the second tunnel packet based on a destination address of the payload part of the second tunnel packet if the destination address of the payload part of the second tunnel packet is not an IP address of the first OLT device.

Based on the technical solution, in this application, the data payload part of the generated tunnel packet in this application may further include service data. For example, a source address of the service data is an IP address of a device that initiates the service data, and a destination address of the service data is an IP address of a service server corresponding to the service data. In this case, if a service type packet is exchanged between the first OLT device and the second OLT, the service type packet may be encapsulated into a tunnel packet, to improve communication security. In addition, the first OLT device and the second OLT device may transfer a service packet based on an IP address of the service data.

In addition, in this application, the first OLT device may decapsulate the second tunnel packet from the second OLT, and determine, based on an address of the data payload part of the second tunnel packet, whether to resolve the packet or forward the packet.

In a possible implementation, the second IP address is carried in the option field of the DHCP message; or the second IP address is carried in a server IP address field of the DHCP message; or the second IP address is carried in a gateway IP address field of the DHCP message.

Based on the technical solution, in this application, the second IP address in this application may be flexibly carried in a field of the DHCP message.

In a possible implementation, a type of the first tunnel packet includes an internet protocol virtual private network IP VPN tunnel packet and a multiprotocol label switching MPLS tunnel packet; and the IP VPN tunnel packet includes one of the following: a VLAN tunnel packet, a VxLAN tunnel packet, a segment routing version SRv6 tunnel packet, and a generic routing encapsulation GRE tunnel packet.

In a possible implementation, the indication message further includes a parameter of the first tunnel packet; and the parameter of the first tunnel packet is a protocol parameter corresponding to the type of the first tunnel packet, and when the tunnel packet is a VxLAN tunnel packet, a parameter of the tunnel packet includes: a virtual extensible local area network VxLAN tunnel endpoint IP address and a VxLAN network identifier VNI.

Based on the technical solution, in this application, the DHCP message may further include a tunnel packet type and a tunnel parameter corresponding to the tunnel packet type, so that the first OLT device encapsulates a packet (for example, a management type packet or a service type packet) into a tunnel packet, to improve communication security.

In a possible implementation, the method further includes: The first OLT device falls within a management range of the second OLT device based on a keepalive mechanism.

Based on the technical solution, in this application, both communication parties may determine, based on the keepalive mechanism, whether a peer end is offline, to improve communication efficiency.

According to a second aspect, a network transmission method is provided. The method includes: A second optical line terminal OLT device sends a dynamic host configuration protocol DHCP message to a first OLT device. The DHCP message includes a first internet protocol IP address and a second IP address, the first IP address is an address assigned by a DHCP server to the first OLT device, the second IP address is an address of the second OLT device, the DHCP message further includes an indication message, and the indication message indicates a tunnel packet type. The indication message is used by the first OLT device to generate a corresponding first tunnel packet, a source address of the first tunnel packet is the first IP address, and a destination address of the first tunnel packet is the second IP address.

In a possible implementation, an option field of the DHCP message includes a third IP address and a fourth IP address, a payload part of the first tunnel packet includes management data, a source address of the payload part is the third IP address, and a destination address of the payload part is the fourth IP address.

In a possible implementation, a source address of the payload part is an IP address of a device that initiates the service data, and a destination address of the payload part is an IP address of a service server corresponding to the service data.

In a possible implementation, the second OLT device receives a second tunnel packet from the first OLT device. A source address of the second tunnel packet is the first IP address, and a destination address of the second tunnel packet is the second IP address. The second OLT device decapsulates the second tunnel packet, to obtain a payload part of the second tunnel packet. The second OLT device resolves the payload part of the second tunnel packet if a destination address of the payload part of the second tunnel packet is an IP address of the second OLT device; or the second OLT device forwards the payload part of the second tunnel packet based on a destination address of the payload part of the second tunnel packet if the destination address of the payload part of the second tunnel packet is not an IP address of the second OLT device.

In a possible implementation, the second IP address is carried in the option field of the DHCP message; or the second IP address is carried in a server IP address field of the DHCP message; or the second IP address is carried in a gateway IP address field of the DHCP message.

In a possible implementation, a type of the first tunnel packet includes an internet protocol virtual private network IP VPN tunnel packet and a multiprotocol label switching MPLS tunnel packet; and the IP VPN tunnel packet includes one of the following: a VLAN tunnel packet, a VxLAN tunnel packet, a segment routing version SRv6 tunnel packet, and a generic routing encapsulation GRE tunnel packet.

In a possible implementation, the indication message further includes a parameter of the first tunnel packet; and the parameter of the first tunnel packet is a protocol parameter corresponding to the type of the first tunnel packet, and when the tunnel packet is a VxLAN tunnel packet, a parameter of the tunnel packet includes: a virtual extensible local area network VxLAN tunnel endpoint IP address and a VxLAN network identifier VNI.

In a possible implementation, the method further includes: The first OLT device and the second OLT device enable, based on a keepalive mechanism, the first OLT device to fall within a management range of the second OLT device.

According to a third aspect, a network transmission device is provided. The device includes a unit configured to perform the method in any one of the first aspect or the possible implementations of the first aspect.

According to a fourth aspect, a network transmission device is provided. The device includes a unit configured to perform the method in any one of the second aspect or the possible implementations of the second aspect.

According to a fifth aspect, a network transmission device is provided, including a processor. The processor is coupled to a memory, and may be configured to execute instructions in the memory, to implement the method in any possible implementation in the first aspect. Optionally, the device further includes the memory. Optionally, the device further includes a communication interface, and the processor is coupled to the communication interface.

In an implementation, the network transmission device is an optical line terminal device. When the device is a terminal device, the communication interface may be a transceiver or an input/output interface.

In another implementation, the device is a chip configured in a terminal device. When the device is a chip configured in the terminal device, the communication interface may be an input/output interface.

In an implementation, the device is a host node device. When the device is a host node device, the communication interface may be a transceiver or an input/output interface.

In another implementation, the device is a chip configured in a host node. When the device is a chip configured in the host node, the communication interface may be an input/output interface. Optionally, the transceiver may be a transceiver circuit. Optionally, the input/output interface may be an input/output circuit.

According to a sixth aspect, a network transmission device is provided, including a processor. The processor is coupled to a memory, and may be configured to execute instructions in the memory, to implement the method in any possible implementation in the second aspect. Optionally, the device further includes the memory. Optionally, the device further includes a communication interface, and the processor is coupled to the communication interface.

In an implementation, the device is a network device. When the device is a network device, the communication interface may be a transceiver or an input/output interface.

In another implementation, the device is a chip configured in a network device. When the device is a chip configured in the network device, the communication interface may be an input/output interface.

In an implementation, the device is a host node device. When the device is a host node device, the communication interface may be a transceiver or an input/output interface.

In another implementation, the device is a chip configured in a host node device. When the device is a chip configured in the host node device, the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal by using the input circuit and transmit a signal by using the output circuit, so that the processor performs the method in any possible implementation of the first aspect or the second aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example but not limited to, a receiver, a signal output by the output circuit may be output to, for example but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to an eighth aspect, a processing device is provided, including a processor and a memory. The processor is configured to read instructions stored in the memory, and may receive a signal via a receiver, and transmit a signal via a transmitter, to perform the method in any possible implementation of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the eighth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any possible implementation of the first aspect and the second aspect.

According to a tenth aspect, a computer-readable medium is provided. The computer-readable medium stores a computer program (which may also be referred to as code or instructions). When the computer program is run on a computer, the computer is enabled to perform the method in any possible implementation of the first aspect and the second aspect.

According to an eleventh aspect, a chip system is provided, including a processor, configured to invoke a computer program from a memory and run the computer program, so that a device in which the chip system is installed performs the method in each possible implementation of the first aspect and the second aspect.

According to a twelfth aspect, a network transmission system is provided. The communication system includes the device in the third aspect and the device in the fourth aspect.

### BRIEF DESCRIPTION OF DRAWINGS

FIG. 1 is a schematic diagram of a scenario to which this application is applicable;
FIG. 2 is a schematic diagram of a tunnel packet according to this application;
FIG. 3 is a flowchart of a network transmission method 300 according to this application;
FIG. 4 is a flowchart of a network transmission method 400 according to this application;
FIG. 5 is a schematic block diagram of a network transmission device 100 according to this application; and
FIG. 6 is a schematic block diagram of a network transmission device 200 according to this application.

### DESCRIPTION OF EMBODIMENTS

The following describes technical solutions of this application with reference to accompanying drawings.

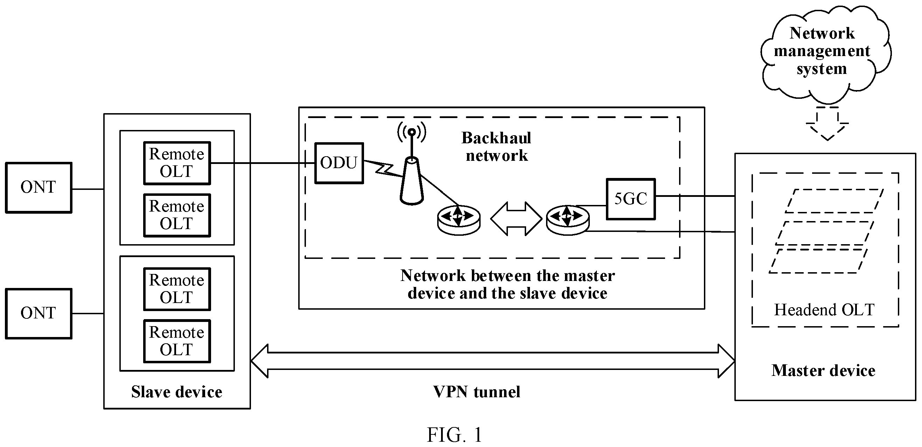

The following first describes a network system architecture related to embodiments of this application with reference to FIG. 1.

FIG. 1 is a diagram of a system architecture to which an embodiment of this application is applicable. As shown in the figure, the network architecture mainly includes a master device, a slave device, a network between the master device and the slave device, a network management system, and a virtual private network (virtual private network, VPN). The following separately describes the devices.

Master device: The master device in this application may also be understood as a headend (headend) optical line terminal (optical line terminal, OLT). The master device in this application is a core management unit, and there is only one master device. All configurations of an aggregation system are distributed from the master device to the slave device.

Slave device: The slave device in this application may also be understood as a remote (remote) OLT, and there may be a plurality of slave devices.

In this application, the master device and the slave device jointly form the aggregation system, and for the network management system, the master device and the slave device are one logical network element.

The network between the master device and the slave device may be an IP network, a 5G network, or an IP backhaul network (responsible for a communication task between a base station and a core network device).

It should be noted that a network between the headend OLT and the remote OLT does not belong to a logical network element of the aggregation system.

Network management system: The network management system in this application may manage the aggregation system. For the network management system, the aggregation system (including the master device and the slave device) is an independent network element.

VPN tunnel: The VPN tunnel in this application may be used by the master device and the slave device to exchange a management packet, a protocol packet, a service packet, or the like.

To help understand the technical solutions of this application, the following first briefly describes some technical terms used in this application.

OLT: The OLT in this application may be a central office device in telecommunication, and is configured to be connected to a fiber optic trunk cable. A function of the OLT is equivalent to a switch or a router in a conventional communication network, and the OLT is a device at an ingress of an external network and an egress and an ingress of an internal network. The function of the OLT is implementing traffic scheduling and buffer control, providing a user-oriented passive optical network interface, and allocating a bandwidth. In brief, two functions are implemented. For uplink data, uplink access of a passive optical network (passive optical network, PON) is implemented. For downlink data, obtained data is distributed to all optical network units (optical network unit, ONU) through an optical data network (optical data network, ODN), to control and manage an optical network terminal (optical network terminal, ONT).

ONU: The ONU usually has two functions: selectively receiving broadcast sent by the OLT, and giving a receiving response to the OLT if data needs to be received; and collecting and caching Ethernet data that needs to be sent by a user, and sending the cached data to the OLT based on an allocated sending window. There may be another network between the ONU and an end user.

ONT: The ONT is referred to as an "optical modem", is used by the end user, and may provide the user with voice, data, and multimedia services. The ONT is a part of the ONU.

Based on the foregoing descriptions, the OLT may be understood as a management end, and the ONU may be understood as a terminal. Service provisioning of the ONU is delivered by the OLT. The ONU and the OLT have a master-slave relationship. One OLT may be connected to a plurality of ONUs through an optical splitter.

VPN: The VPN is a virtual private communication network established in a public network by using an internet service provider and a network service provider. The VPN may be understood as a temporary and secure connection established through a public network (for example, the internet), and is a secure and stable tunnel that may pass through the public network. The VPN is an extension to an enterprise internal network. For example, the VPN may help a remote user, an enterprise branch, a business partner, and a supplier establish a trusted and secure connection to the enterprise internal network, to ensure secure transmission of data. The VPN may be used for global internet access of continuously increasing mobile users to achieve a secure connection; may be a virtual private wire used to implement secure communication between enterprise websites; and may be a virtual private network used to be connected to a secure extranet of a business partner and a user in a cost-effective manner.

Virtual local area network (virtual local area network, VLAN): The virtual local area network may be understood as a group of logical devices and users. These devices and users are not limited by physical positions, may be organized based on factors such as functions, departments, and applications, and communicate with each other as if the devices and users are on a same network segment. The VLAN may resolve a problem that broadcast cannot be limited when switches are interconnected in a local area network. In such a technology, a local area network (local area network, LAN) may be divided into a plurality of logical LANs, that is, VLANs. Each VLAN is a broadcast domain. Hosts in the VLAN communicate with each other in a manner the same as a manner in which hosts in a LAN communicate with each other, but hosts in different VLANs cannot directly communicate with each other. In this way, a broadcast packet is limited in the VLAN.

It can be learned from the foregoing descriptions that the VPN mainly integrates networks distributed in different places, and the networks logically seems to be in a same local area network. The VLAN may further divide and isolate a local area network into smaller networks.

Virtual extensible local area network (virtual extensible local area network, VxLAN): The virtual extensible local area network is an extension to a conventional VLAN protocol. A feature of the VxLAN is encapsulating a Layer 2 Ethernet frame into a user datagram protocol (user datagram protocol, UDP), and transmitting the user datagram protocol in a Layer 3 network. The VxLAN is essentially a tunneling technology in which a logical tunnel is established in an IP network between a source network device and a destination network device, and a user-side packet is specifically encapsulated and forwarded through the tunnel. From a perspective of the user, a server connected to a network is like being connected to different ports of a virtual Layer 2 switch, to facilitate communication.

The VLAN is a conventional network isolation technology. A quantity of VLANs in a standard definition is only approximately 4000, and cannot meet a tenant isolation requirement in a large-scale data center. In addition, a Layer 2 range of the VLAN is usually small and fixed, and cannot support a large-range dynamic migration of a virtual machine. The VxLAN overcomes the foregoing disadvantages of the VLAN. An identifier capability of up to 16 M tenants may be provided by using 24 bits in the VxLAN, and is much greater than the quantity 4000 of VLANs. In addition, in the VxLAN, a virtual tunnel that traverses a basic IP network of the data center is essentially established between two switches and a data center network is virtualized into a large-scale "Layer 2 switch", to meet a requirement of the large-range dynamic migration of the virtual machine.

The following describes a concept related to the tunneling technology.

Tunneling technology: The tunneling (tunneling) technology is a manner of establishing a virtual link between networks by using an infrastructure of the internet to transmit data. Data transmitted through the tunnel may be protocol data units (protocol data unit, PDU) of different protocols. The tunnel may re-encapsulate a PDU of another protocol and send the PDU through the network. A new PDU provides routing information, to transmit encapsulated data through the internet. After the PDU is re-encapsulated, a sender and a receiver of data transmit data and communicate like on a dedicated "tunnel". To establish a tunnel, communication parties at two ends of the tunnel need to use a same tunnel protocol.

The tunneling technology is essentially an encapsulation technology in which a network layer protocol is used to transmit another network layer protocol. To be specific, a network transmission protocol is used to encapsulate a data packet generated based on another protocol into a packet of the network transmission protocol and then transmit the data packet in the network. Basic functions of the tunneling technology are encapsulation and encryption. The data transmitted through the tunnel may be data frames or packets of different protocols. The tunneling protocol re-encapsulates a data frame or packet of another protocol into a new packet header for sending. The new packet header provides routing information, so that encapsulated load data can be transmitted through the internet. An encapsulated data packet is routed between two endpoints of the tunnel through the public internet. A logical path through which the encapsulated data packet passes when the encapsulated data packet is transmitted in the public network is referred to as a tunnel. The tunneling technology is an entire process including data encapsulation, transmission, and decapsulation.

It should be noted that the "tunnel" in the following descriptions may also be understood as a "tunnel packet". Details are not described below again.

VPN tunnel: The VPN tunnel is usually a virtual connection established between VPN nodes or between a VPN node and a user node to transmit VPN data. Data can be transmitted from one VPN node to another node through the tunnel.

VxLAN tunnel: The VxLAN tunnel is used to forward a VxLAN packet. The VxLAN tunnel is identified by using a local VxLAN tunnel endpoint (VxLAN tunnel endpoint, VTEP) address+a remote VTEP address. One VxLAN tunnel may be determined based on one pair of VTEPs. The VTEP is a start point and an endpoint of the VxLAN tunnel. The VxLAN encapsulates and decapsulates an original data frame of a user at the VTEP. The VTEP may be an independent network device or a virtual switch on a server. An original data frame sent by a source server is encapsulated into a packet in a VxLAN format at the VTEP, and is transmitted to another VTEP through the IP network. The original data frame is restored through decapsulation and forwarded to a destination server.

A VxLAN header includes one VxLAN network identifier (VxLAN network identifier, VNI). Only virtual machines in a same VxLAN can communicate with each other. The VNI occupies 24 bits in a data packet, and therefore, may support coexistence of 16 million VxLANs, which are far greater than 4094 VLANs. Therefore, the VNI is applicable to large-scale tenant deployment. The VxLAN tunnel between VTEPs may be shared by all VNIs between two network virtualization edge (network virtualization edge, NVE) devices. One VNI represents only one tenant, and virtual machines with different VNIs cannot directly perform layer 2 communication. When the VxLAN packet is encapsulated, enough space is allocated to the VNI, so that the VNI can support isolation of massive tenants.

It should be noted that the tunnel (which may also be understood as a "tunnel packet") in this application is not limited to the VPN tunnel and the VxLAN tunnel described above, or may be another tunnel related to a network virtualization over layer 3 (network virtualization over layer 3, NVO3) technology, for example, a segment routing over IPv6 (segment routing version 6, SRv6) tunnel or a generic routing encapsulation (generic routing encapsulation, GRE) tunnel, or may be a multiprotocol label switching (multiprotocol label switching, MPLS) tunnel.

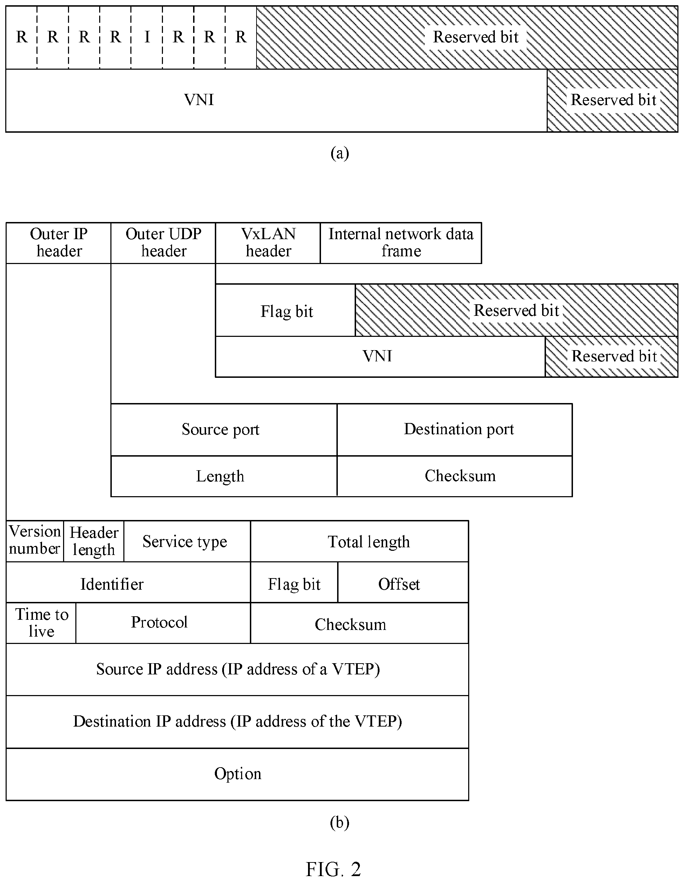

The VxLAN is used as an example. FIG. 2 shows a VxLAN tunnel packet. The VxLAN encapsulates a data frame (which may also be understood as "data payload") of communication in a logical network into a physical network for transmission. Encapsulation and decapsulation processes are completed by a VTEP node. The VxLAN adds a VxLAN header to the data frame in the logical network, and encapsulates the data frame into a UDP packet in a physical network for transmission. FIG. 2 shows a format of the VxLAN header. As shown in (a) in FIG. 2, the VxLAN header includes 8 bytes. A first byte is a flag bit. When a flag bit I is set to 1, it indicates a valid VxLAN header, and other flags are reserved and need to be set to 0 in a transmission process. A second byte to a fourth byte are reserved parts. When a fifth byte to a seventh byte are VxLAN identifiers, it indicates a unique logical network. An eighth byte is also a reserved field and is not used currently. In a VxLAN transmission process, after the VxLAN header is added to the data frame in the logical link network, an outer UDP header and an outer IP header are sequentially added, and then the data frame may be transmitted in the physical network. (b) in FIG. 2 shows an encapsulation format of a data frame. For the VxLAN tunnel packet, a destination port number in a header part of an external user datagram protocol (user datagram protocol, UDP) is 4789, and the value is a port of a default VxLAN resolution program. A source address and a destination address in an outer IP header are both filled with VTEP addresses of both communication parties, and a remaining part of the protocol is the same as that of a conventional network.

The following briefly describes a dynamic host configuration protocol (dynamic host configuration protocol, DHCP).

DHCP: A main function of the DHCP is to assign an IP address to a computer, so that a device can access a network. In addition, the DHCP further has a function of managing a device in a local area network. DHCP is actually a byte stream. Byte data in different positions represents different meanings. The DHCP may be divided into the following two parts: (1) Text part: The text part is essential data in a DHCP packet. (2) Additional option part: An additional option is optional, namely, "Option". Usually, whether to add the additional option is determined based on an actual scenario requirement. The Option part is directly inserted at an end of the DHCP packet, and still belongs to the DHCP packet. A function of Option is used to extend the function of the DHCP. In addition to simple address assignment, DHCP further needs to implement a device management function. Different requirements are usually imposed in different application scenarios. To meet the requirements, the option "Option" whose content may be customized by the user is required. Code of Option may be used to distinguish between identifiers of different uses. Because Option occupies 1 byte, there are 256 options in total, and some of the 256 options are reserved values. Table 1 shows a description of each field of a DHCP message.

**Table 1 Description of each field of a DHCP message**

| Field | Description |
|---|---|
| Packet type (op) | 1 represents a request packet, and 2 represents a response packet. |
| Hardware address type (htype) | 1 represents a hardware address of the 10 Mb/s Ethernet. |
| Hardware address length (hlen) | A value is 6 in the Ethernet. |
| Quantity of hops (hops) | The quantity of hops is set to 0 on a client, and can also be set by a proxy server. |
| Transaction identifier (xid) | A random number selected by the client. The transaction identifier is used by a server and the client to exchange a request and a response between the server and the client. The client matches the request and the response based on the transaction identifier. The identifier is set by the client and returned by the server, and is a 32-bit integer. |
| Quantity of seconds (secs) | The quantity of seconds indicates a quantity of seconds that elapse after the client starts to obtain an IP address or renews the IP address. |
| Flag bit (flags) | A leftmost bit is valid. When the bit is 0, it indicates unicast, and when the bit is 1, it indicates broadcast. |
| Client IP address | The IP address can be filled only when the client is in a bound, updated, or rebound state and can respond to an address resolution protocol request. |
| Your IP address | IP address assigned by the server to the client |
| Server IP address | The server IP address indicates an IP address of a server to be used in a next phase of a DHCP procedure. |
| Gateway IP address | IP address of a DHCP relay |
| Client hardware address (client hardware address) | The field also exists in a header of an Ethernet frame in a data packet of a user datagram protocol. However, the field in the header of the Ethernet frame is usually determined by viewing the data packet, and it is difficult or impossible to obtain the value. Instead, if the field is set in a DHCP packet carried in the user datagram protocol, a user process may easily obtain the value. |
| Server name | The field is a character string that ends with 0, and is filled by the server. |
| Startup file name (file) | Name of a startup file, where a full name is provided in a DHCP offer packet |
| Option (option) | Option is determined based on different packets. |

There are eight types of DHCP packets, and the eight types of DHCP packets are a DHCP discover (Discover) packet, a DHCP offer (Offer) packet, a DHCP request (Request) packet, a DHCP acknowledgment (ACK) packet, a DHCP negative acknowledgment (NAK) packet, and the like. The following briefly describes a function of each packet.

DHCP discover: When a DHCP client requests an address, the DHCP client does not learn of a position of a DHCP server. Therefore, the DHCP client sends a request packet in a broadcast manner in a local network. The packet is a discover packet. The DHCP discover packet aims to discover a DHCP server in the network. All DHCP servers that receive the DHCP discover packet send a response packet. The DHCP client may learn of the position of the DHCP server in the network based on this.

DHCP offer: After receiving a discover packet, the DHCP server searches a configured address pool for a proper IP address, adds a corresponding lease time and other configuration information (for example, a gateway and a domain name system (domain name system, DNS) server), to construct an offer packet, and sends the offer packet to the user, to notify the user that the server can provide an IP address to the user.

DHCP request: The DHCP client may receive many DHCP offer packets, and therefore, needs to select one of the returned DHCP offer packets. The client usually selects, as a target server of the client, a first server that returns an offer packet, and returns a broadcast request message to notify the selected server. After the DHCP client successfully obtains the IP address, when a half of a lease time of the address expires, the DHCP client sends a unicast request packet to the DHCP server to renew the lease time. If the DHCP client does not receive a DHCP ACK packet, when 3/4 of the lease time expires, the DHCP client sends a broadcast request packet to renew the lease time.

DHCP ACK: After receiving a request packet, the DHCP server searches for a corresponding lease record based on user MAC carried in the request packet. If there is a lease record, the DHCP server sends an ACK packet and uses the ACK packet as a response, to notify the user that the assigned IP address can be used.

DHCP NAK: If the DHCP server does not find a lease record or cannot normally assign an IP address due to some reasons after receiving the request packet, the DHCP server sends a NAK packet and uses the NAK packet as a response, to notify the user that no proper IP address can be assigned.

Currently, in an aggregation management solution, a master device and a slave device are directly connected through an optical fiber, and cannot communicate with each other across an IP network, and network devices are deployed inflexibly. In a scenario in FIG. 1, the master device and the slave device need to communicate with each other across a network. A current aggregation management technology cannot support communication between devices in the scenario. Therefore, a network transmission method is required to resolve a problem that a master device and a slave device cannot communicate with each other.

In view of this, this application provides a network transmission method. An IP address of a first OLT device and an IP address of a second OLT device are sent to the first OLT device by using a DHCP message, and a communication tunnel may be established between the first OLT device and the second OLT, so that the first OLT device and the second OLT device can cross an intermediate network, network devices are deployed more flexibly, and a networking capability is enhanced. The following describes the technical solution of this application.

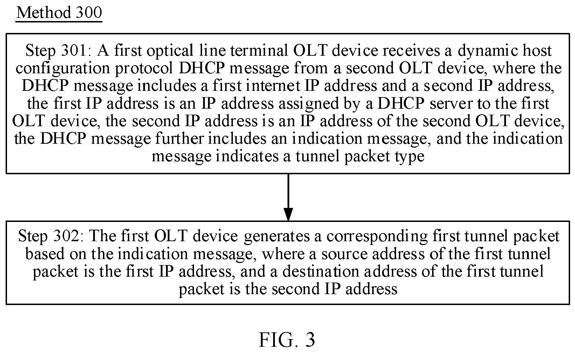

FIG. 3 is a schematic flowchart of a network transmission method 300 according to this application. The method includes the following steps.

Step 301: A first optical line terminal OLT device receives a dynamic host configuration protocol DHCP message from a second OLT device.

In this application, the DHCP message may include a first internet protocol IP address and a second IP address, the first IP address is an IP address assigned by a DHCP server to the first OLT device, and the second IP address is an IP address of the second OLT device.

In this application, the DHCP message may further include an indication message, and the indication message indicates a tunnel packet type.

It should be noted that in this application, there may be one or more first OLT devices, and there may be one second OLT device.

It should be noted that in this application, the first OLT device may also be understood as a slave device, and the second OLT device may also be understood as a master device.

Step 302: The first OLT device generates a corresponding first tunnel packet based on the indication message.

In this application, a source address of the first tunnel packet is the first IP address, and a destination address of the first tunnel packet is the second IP address.

In this application, the IP address of the first OLT and the IP address of the second OLT may be sent to the first OLT device by using the DHCP message, the first OLT device may generate a corresponding tunnel packet based on the indication message, and a source address and a destination address of the tunnel packet are respectively the first OLT device and the second OLT device.

In this application, the second IP address is carried in an option field of the DHCP message; or the second IP address is carried in a server IP address field of the DHCP message; or the second IP address is carried in a gateway IP address field of the DHCP message.

Based on the technical solution of this application, a communication tunnel may be established between the first OLT device and the second OLT, so that the first OLT device and the second OLT device can cross an intermediate network, network devices are deployed more flexibly, and a networking capability is enhanced.

In some embodiments, the option field of the DHCP message may include a third IP address and a fourth IP address, a payload part of the first tunnel packet includes management data, a source address of the payload part is the third IP address, and a destination address of the payload part is the fourth IP address.

In an example, in this application, the third IP address may be a management IP address assigned by the second OLT device to the first OLT, and the fourth IP address may be a management IP address of the second OLT.

Based on the technical solution, in this application, a data payload part of a generated tunnel packet may further include management data. For example, a source address of the management data is the third IP address, and a destination address of the management data is the fourth IP address. In this case, if a management type packet is exchanged between the first OLT device and the second OLT, the management type packet may be encapsulated into a tunnel packet, to improve communication security. In addition, the first OLT device and the second OLT device may exchange a management packet based on an IP address of the management data, and the first OLT device and the second OLT device may be managed across an IP network.

In some other embodiments, the data payload part of the tunnel packet may include service data, a source address of the data payload part is an IP address of a device that initiates the service data, and a destination address of the data payload part is an IP address of a service server corresponding to the service data.

In an example, a source address of the service data may be an IP address of an ONT device #1, and a destination address of the service data may be an IP address of an ONT device #2. In this case, a service type packet may be forwarded through a tunnel provided in this application. The first OLT device and the second OLT device forward the service type packet.

In an example, the source address of the service data may alternatively be the first IP address, and the destination address of the service data may be the second IP address. In this case, it is equivalent to that a service packet may be exchanged between the first OLT device and the second OLT device.

Based on the technical solution, the data payload part of the generated tunnel packet in this application may further include service data. For example, a source address of the service data is an IP address of a device that initiates the service data, and a destination address of the service data is an IP address of a service server corresponding to the service data. In this case, if a service type packet is exchanged between the first OLT device and the second OLT, the service type packet may be encapsulated into a tunnel packet, to improve communication security. In addition, the first OLT device and the second OLT device may transfer a service packet based on an IP address of the service data.

In some other embodiments, the first OLT device may further receive a second tunnel packet from the second OLT device. In this application, a source address of the second tunnel packet is the second IP address, and a destination address of the second tunnel packet is the first IP address. The first OLT device may decapsulate the second tunnel packet, to obtain a payload part of the second tunnel packet. The first OLT device may resolve the payload part of the second tunnel packet if a destination address of the payload part of the second tunnel packet is the IP address of the first OLT device; or the first OLT device may forward the payload part of the second tunnel packet based on the destination address of the payload part of the second tunnel packet if a destination address of the payload part of the second tunnel packet is not the IP address of the first OLT device.

Based on the technical solution, in this application, the first OLT device may decapsulate the second tunnel packet from the second OLT, and determine, based on an address of the data payload part of the second tunnel packet, whether to resolve the packet or forward the packet.

The solution in this embodiment is mainly described based on the first OLT device, and the technical solution of the second OLT also corresponds to this embodiment. Details are not described again.

It should be noted that the technical solution provided in this application is also applicable to, for example, communication between routers, or communication between servers.

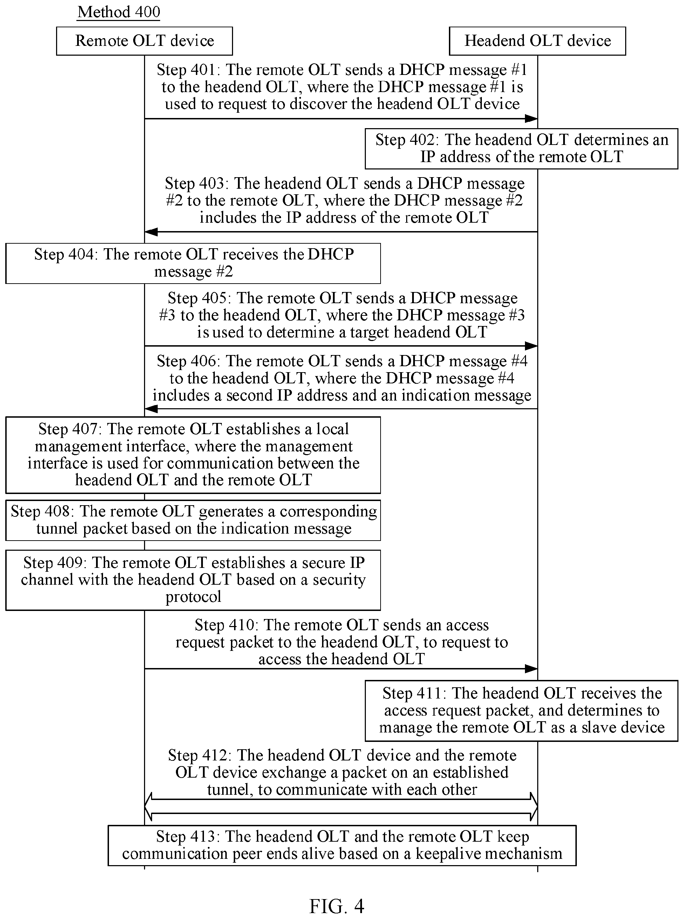

FIG. 4 is a schematic flowchart of a network transmission method 400 according to this application. The method includes the following steps.

Step 401: A remote OLT device (an example of a first OLT device) sends a DHCP message #1 to a headend OLT device (an example of a second OLT device), where the DHCP message #1 may be used to request to discover the headend OLT. Correspondingly, the headend OLT receives first information.

In an example, the remote OLT may send a DHCP discover packet to the headend OLT. The packet is used to request to discover the headend OLT.

Step 402: The headend OLT receives the DHCP message #1, and determines an IP address of the remote OLT.

In an example, the headend OLT may randomly assign an IP address in a local address pool, and use the IP address as an address of the remote OLT.

Step 403: The headend OLT sends a DHCP message #2 to the remote OLT, where the DHCP message #2 may include the IP address (an example of a first IP address) of the remote OLT.

In an example, the headend OLT may send a DHCP offer to the remote OLT. The DHCP offer includes the IP address of the remote OLT.

Step 404: The remote OLT receives the DHCP message #2.

Step 405: The remote OLT sends a DHCP message #3 to the headend OLT. The DHCP message #3 is used to determine a target headend OLT.

In an example, the remote OLT may send a DHCP request to the headend OLT. The DHCP request is used to determine that the headend OLT is the target headend OLT.

Step 406: The headend OLT sends a DHCP message #4 to the remote OLT, where the DHCP message #4 is used to notify the remote OLT device that the assigned IP address can be used.

In an example, the headend OLT may send a DHCP ACK to the remote OLT. The DHCP ACK is used to notify the remote OLT device that the assigned IP address can be used.

In this application, in an example, the DHCP message #4 may further include a second IP address and an indication message.

In this application, the first IP address is an IP address assigned by the DHCP server to the remote OLT device, and the second IP address is an IP address of the headend OLT device.

In this application, the indication message may indicate a tunnel packet type. In an example, the indication message may indicate that the tunnel packet type is an IP VPN tunnel packet, or the tunnel packet type is a multiprotocol label switching MPLS tunnel packet. Specifically, the indication message may indicate a specific tunnel packet whose tunnel packet type is an IP VPN tunnel packet, for example, a VLAN tunnel packet, a VxLAN tunnel packet, a segment routing version SRv6 tunnel packet, or a generic routing encapsulation GRE tunnel packet.

In this application, the indication message further includes a parameter of the indicated tunnel packet type, and a parameter of the tunnel packet may be a protocol parameter corresponding to the tunnel packet type. In an example, if the indication message indicates that the tunnel packet type is a VxLAN tunnel packet, the indication message may further indicate a parameter of the VxLAN tunnel packet, for example, a VxLAN tunnel endpoint IP address or a VxLAN network identifier VNI.

In this application, the second IP address may be carried in an option field of a DHCP message; or the second IP address may be carried in a server IP address field of a DHCP message; or the second IP address may be carried in a gateway IP address field of a DHCP message.

In this application, an option field of the DHCP message #4 may further include a third IP address and a fourth IP address.

In an example, in this application, the third IP address may be a management IP address assigned by the second OLT device to the first OLT, and the fourth IP address may be a management IP address of the second OLT. Optionally, the option field of the DHCP message #4 may further include a VLAN used between the headend OLT and the remote OLT.

For example, an option 224 may carry the third IP address, the fourth IP address, and the VLAN (which may also be understood as a management parameter). For another example, an option 225 may carry the tunnel packet type and the parameter of the tunnel packet type (which may also be understood as a tunnel parameter). For another example, an option 226 may carry another pre-deployment parameter (for example, an aggregation management mode). It should be noted that, in this application, the selected option field is an example, and another reserved option field may also be used to transmit the tunnel parameter and the management parameter.

In this application, the third IP address, the fourth IP address, the VLAN, the tunnel packet type, and the parameter of the tunnel packet type may be preconfigured by a network management network element for the headend OLT, or may be configured in another manner. This is not limited in this application. For example, the headend OLT may plan or determine the management parameter and the tunnel parameter in advance.

In this embodiment, that the tunnel packet is a VxLAN tunnel packet is used as an example. As described above, the VxLAN tunnel may be identified by using a local VTEP address and a remote VTEP address. One pair of VTEP addresses corresponds to one VxLAN tunnel. A VxLAN header includes one VNI. Only virtual machines in a same VxLAN can communicate with each other. In this case, the tunnel parameter may be, for example, a VTEP IP address and the VNI of the VxLAN. Based on the VTEP IP address and VNI of the VxLAN, the headend OLT and the remote OLT can negotiate to establish an end-to-end VxLAN tunnel.

In this application, in step 401 to step 406, the headend OLT may automatically discover the remote OLT in a DHCP manner, and may obtain the management parameter (for example, the third IP address, the fourth IP address, and the VLAN) and the tunnel parameter (for example, the tunnel packet type and the parameter of the tunnel packet type) from the headend OLT, without requiring a third-party device (for example, a cloud server) or a manual onsite configuration. This is more convenient and flexible, and reduces costs.

Step 407: The remote OLT establishes a local management interface, where the management interface is used for communication between the headend OLT and the remote OLT.

In an example, the remote OLT may complete establishment of the local management interface based on the assigned management IP address (for example, the third IP address).

In this application, after obtaining the third IP address, the remote OLT may locally establish the management interface. It may also be understood that the remote OLT locally establishes a logical access point (that is, a management interface) based on the assigned management IP address. The management interface may be used for communication between the headend OLT and the remote OLT. For example, the remote OLT may receive and send a packet (for example, a management type packet or a service type packet) between the headend OLT and the remote OLT through the management interface.

Correspondingly, for the headend OLT, the management interface of the headend OLT may be preconfigured.

Step 408: The remote OLT generates a corresponding tunnel packet (for example, a tunnel packet #1) based on the indication message.

In this application, a source address of the tunnel packet #1 may be the first IP address, and a destination address of the tunnel packet #1 may be the second IP address. It may also be understood that, in this application, a communication tunnel may be established between the remote OLT device and the headend OLT device to exchange various types of packets, and all types of packets are encapsulated by using a tunnel packet. Specifically, the indication message may indicate a specific type of tunnel packet used for encapsulation.

In an example, if the indication message indicates that the tunnel packet type is a VxLAN tunnel packet, and parameters of the indication packet include a VxLAN tunnel endpoint IP address and a VxLAN network identifier VNI, the remote OLT may generate a VxLAN tunnel packet from the remote OLT to the headend OLT based on the tunnel packet type and the parameter of the tunnel packet type in the indication message.

Correspondingly, the headend OLT may also generate a corresponding tunnel packet. Details are not described herein again. In other words, the remote OLT and the headend OLT may exchange a packet through the tunnel.

Optionally, if the DHCP message includes a pre-deployment parameter, the remote OLT may further pre-deploy another Layer 2 domain based on the carried pre-deployment parameter. For example, if the aggregation management mode is carried, the remote OLT device may further determine a specific physical port used to be connected to a network (which may also be understood as a physical port at which the assigned third IP address may be specifically configured), or whether a plurality of physical ports are aggregated to be connected to the network.

In this application, step 407 and step 408 may be understood as establishing the communication tunnel between the remote OLT and the headend OLT, and destination addresses of the communication tunnel are peer ends.

Step 409: The remote OLT may establish a secure IP communication tunnel with the headend OLT based on a security protocol.

For example, the remote OLT and the headend OLT may communicate based on a transport layer security (transport layer security, TLS) protocol, an internet protocol security (internet protocol security, IPsec), and the like.

Step 410: The remote OLT sends an access request packet to the headend OLT, to request to access the headend OLT.

In this application, the remote OLT may send the access request packet to the headend OLT. The packet may be encapsulated into a tunnel packet. A source address of the tunnel packet is the first IP address (that is, an IP address of a remote device), and a destination address of the tunnel packet is the second IP address (that is, an IP address of a headend device). A source address of a data payload part of the access request packet may be the third IP address (for example, the management IP address assigned to the remote OLT), and a destination address, namely, the IP address is the fourth IP address (for example, a management IP address of the headend OLT).

Step 411: The headend OLT receives the access request packet sent by the remote OLT, and determines to manage the remote OLT as a slave management device.

Specifically, after receiving the access request packet of the remote OLT device, the headend OLT device may first decapsulate the tunnel packet. The source address of the data payload part of the access request packet may be the third IP address (for example, the management IP address assigned to the remote OLT), and the destination address, namely, the IP address is the fourth IP address (for example, the management IP address of the headend OLT). In this case, the headend device may determine that the remote OLT is a slave device.

Step 412: The headend OLT and the remote OLT exchange a packet in an established tunnel, to perform communication.

For example, a packet exchanged between the headend OLT and the remote OLT may be encapsulated into a tunnel packet, and is carried in a communication tunnel. Communication is performed based on a secure IP communication channel, to ensure information security.

In this application, the network management network element may perform a service configuration on the logical network element, and information such as configuration and query performed by the network management system on a specific system (for example, a system including the headend OLT and the remote OLT) can only be delivered to the headend OLT. For example, the configuration of the remote OLT may be sent to the headend OLT, and then delivered to the remote OLT by using the headend OLT. For example, for a configuration parameter configured on the remote OLT, the headend OLT may deliver a configuration message to the remote OLT for configuration. In this case, the packet exchanged between the headend OLT and the remote OLT may be carried in the VxLAN tunnel, and communication is performed based on a secure IP communication channel, to ensure information security.

In an example, for the management packet, a management packet between the headend OLT and the remote OLT may be encapsulated into a tunnel packet (for example, may be encapsulated into a VxLAN tunnel packet type). A source address of the tunnel packet is a first IP address (that is, an IP address of the remote device), and a destination address of the tunnel packet is a second IP address (that is, an IP address of the headend device). A data payload part of the tunnel packet includes management data, the source address of the payload part may be a management IP address assigned to the remote OLT, and the destination address of the payload part may be a management IP address of the headend OLT. After receiving the management type packet, the headend OLT device may first decapsulate the tunnel packet, and may perform a next step of processing (for example, resolve the management data) on the management packet after determining that the destination address of the data payload part is the management IP address of the headend OLT device.

In another example, for the management type packet, the remote OLT may also receive a management packet (for example, a tunnel packet #2) from the headend OLT. The management packet may be encapsulated into the tunnel packet #2. In this case, a source address of the tunnel packet #2 is the second IP address, and a destination address of the second tunnel packet is the first IP address. The data payload part of the tunnel packet includes management data, a source address of the payload part may be a management IP address of the headend OLT, and a destination address of the payload part may be a management IP address assigned to the remote OLT. After receiving the management type packet, the remote OLT device may first decapsulate the tunnel packet, and may perform a next step of processing (for example, resolve the management data) on the management packet after determining that the destination address of the data payload part is the management IP address of the remote OLT device.

Based on the technical solution, in this application, the remote OLT and the headend OLT may exchange a management packet based on the communication tunnel, and the remote OLT and the headend OLT device may be managed across an IP network.

For a service packet, a service packet between the headend OLT and the remote OLT may be encapsulated by using another tunnel packet type, and is isolated from the VxLAN tunnel for transmitting the management type packet. For example, an uplink service packet of an ONT may enter a port of the remote OLT, and the remote OLT may transmit the uplink service packet to a headend OLT based on the communication tunnel. After the uplink service packet leaves the tunnel, the headend OLT may restore the packet and send the packet from an uplink port of the headend OLT. Types of a downlink service packet and an uplink service packet are not described herein. For the network management system, the headend OLT and the remote OLT are a logical unit as a whole.

In an example, the service packet between the headend OLT and the remote OLT may be encapsulated into a tunnel packet, a source address of the tunnel packet is a first IP address (that is, an IP address of the remote device), and a destination address of the tunnel packet is a second IP address (that is, an IP address of the headend device). In a possible implementation, a source address of service data may be the IP address of the ONT device #1, and a destination address of the service data may be the IP address of the ONT device #2. In this case, the service type packet may be forwarded through a tunnel provided in this application. The first OLT device and the second OLT device forward the service type packet. In another possible implementation, a source address of service data may be the IP address of the ONT device #1, and a destination address of the service data may be the second IP address. Because the destination address of the service packet is the headend OLT, the headend OLT may perform a next step of processing on the service packet (for example, resolve the service data).

Based on the technical solution, the data payload part of the generated tunnel packet in this application may further include service data. For example, a source address of the service data is an IP address of a device that initiates the service data, and a destination address of the service data is an IP address of a service server corresponding to the service data. In this case, if a service type packet is exchanged between the first OLT device and the second OLT, the service type packet may be encapsulated into a tunnel packet, to improve communication security. In addition, the first OLT device and the second OLT device may transfer a service packet based on an IP address of the service data.

Optionally, in some embodiments, step 413 may be further included: The headend OLT and the remote OLT keep communication peer ends alive based on a keepalive mechanism.

In this application, in consideration that after a communication connection is established between the headend OLT and the remote OLT, data exchange does not always exist, and some connections are actively released after data exchange is completed, and some connections are not actively released. Various cases such as a power failure and a crash may occur on both interaction parties in a time period in which no data is exchanged for a long period of time. To resolve this problem, a device may be kept alive based on the keepalive mechanism. For example, the headend OLT may periodically send a message to the remote OLT, and the remote OLT gives a response. If the headend device receives the response, the headend device considers that the remote OLT still exists. If the headend device does not receive the response, the headend device considers that the remote OLT is disconnected (not managed). For example, devices may be kept alive based on a transmission control protocol.

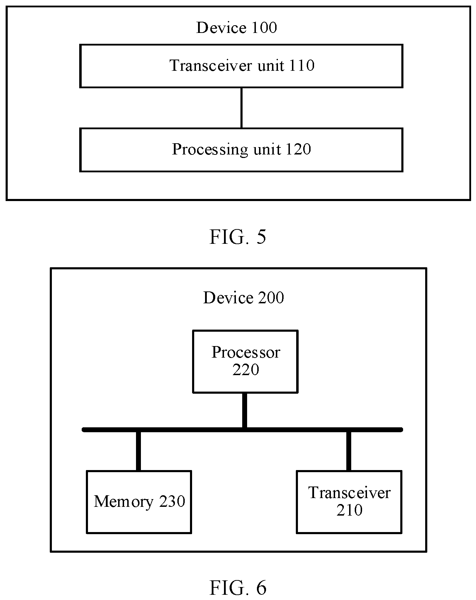

The foregoing describes in detail the network transmission method provided in embodiments of this application with reference to FIG. 2 to FIG. 4. The following describes a network transmission device provided in an embodiment of this application with reference to FIG. 5 and FIG. 6. It should be understood that descriptions of apparatus embodiments correspond to the descriptions of the method embodiments. Therefore, for content that is not described in detail, refer to the method embodiments. For brevity, details are not described herein again.

The foregoing mainly describes the solutions provided in embodiments of this application from a perspective of interaction between nodes. It may be understood that, to implement the foregoing functions, each node, for example, a terminal device includes a corresponding hardware structure and/or software module for implementing each function. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules based on the method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. An example in which each functional module is obtained through division based on each corresponding function is used below for description.

FIG. 5 is a schematic block diagram of a device 100 according to an embodiment of this application. As shown in the figure, the device 100 may include a transceiver unit 110 and a processing unit 120.

In a possible design, the device 100 may be the first OLT device in the method embodiments, or may be a chip configured to implement a function of the first OLT device in the method embodiments. It should be understood that the device 100 may correspond to the first OLT device in the method 300 and the method 400 according to embodiments of this application, and the device 100 may perform steps corresponding to the first OLT device in the method 300 and the method 400 in embodiments of this application. It should be understood that a specific process in which the units perform the corresponding steps is described in detail in the method embodiments. For brevity, details are not described herein again.

Specifically, the transceiver unit is configured to receive a dynamic host configuration protocol DHCP message. The DHCP message includes a first internet protocol IP address and a second IP address, the first IP address is an address assigned by a DHCP server to the first OLT device, the second IP address is an address of a second OLT device, the DHCP message further includes an indication message, and the indication message indicates a tunnel packet type. The processing unit is configured to generate a corresponding first tunnel packet based on the indication message. A source address of the first tunnel packet is the first IP address, and a destination address of the first tunnel packet is the second IP address.

In some embodiments, the transceiver unit is further configured to receive a second tunnel packet. A source address of the second tunnel packet is the first IP address, and a destination address of the second tunnel packet is the second IP address. The processing unit is further configured to decapsulate the second tunnel packet, to obtain a payload part of the second tunnel packet. The processing unit is configured to resolve the payload part of the second tunnel packet if a destination address of the payload part of the second tunnel packet is an IP address of the first OLT device; or the processing unit is configured to forward the payload part of the second tunnel packet based on a destination address of the payload part of the second tunnel packet if the destination address of the payload part of the second tunnel packet is not an IP address of the first OLT device.

In a possible design, the device 100 may be the second OLT device in the method embodiments, or may be a chip configured to implement a function of the second OLT device in the method embodiments. It should be understood that the device 100 may correspond to the second OLT device in the method 300 and the method 400 according to embodiments of this application, and the device 100 may perform steps corresponding to the second OLT device in the method 300 and the method 400 in embodiments of this application. It should be understood that a specific process in which the units perform the corresponding steps is described in detail in the method embodiments. For brevity, details are not described herein again.

Specifically, the transceiver unit is configured to send a dynamic host configuration protocol DHCP message. The DHCP message includes a first internet protocol IP address and a second IP address, the first IP address is an address assigned by a DHCP server to a first OLT device, the second IP address is an address of the second OLT device, the DHCP message further includes an indication message, and the indication message indicates a tunnel packet type. The indication message is used by the first OLT device to generate a corresponding first tunnel packet, a source address of the first tunnel packet is the first IP address, and a destination address of the first tunnel packet is the second IP address.

In some embodiments, the transceiver unit is further configured to receive a second tunnel packet. A source address of the second tunnel packet is the first IP address, and a destination address of the second tunnel packet is the second IP address. The processing unit is configured to decapsulate the second tunnel packet, to obtain a payload part of the second tunnel packet. The processing unit is configured to resolve the payload part of the second tunnel packet if a destination address of the payload part of the second tunnel packet is an IP address of the second OLT device; or the processing unit is configured to forward the payload part of the second tunnel packet based on a destination address of the payload part of the second tunnel packet if the destination address of the payload part of the second tunnel packet is not an IP address of the second OLT device.

FIG. 6 is a schematic block diagram of a device 200 according to an embodiment of this application. As shown in the figure, the device 200 includes at least one processor 220. The processor 220 is coupled to a memory, and is configured to execute instructions stored in the memory, to send a signal and/or receive a signal. Optionally, the apparatus 200 further includes the memory 230, configured to store instructions. Optionally, the apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 100.

It should be understood that a specific process in which the transceiver and the processor perform the foregoing corresponding steps is described in detail in the method embodiments. For brevity, details are not described herein again.

In an implementation process, steps in the foregoing methods may be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the method embodiments may be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly executed and completed by a hardware decoding processor, or may be executed and completed by a combination of hardware and software modules in the decoding processor. A software module may be located in a mature storage medium in the art such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the system and methods described in this specification includes but is not limited to these memories and any memory of another proper type.

According to the methods provided in embodiments of this application, this application further provides a computer program product. The computer program product store computer program code. When the computer program code is run on a computer, the computer is enabled to perform the method in either of embodiments of the method 300 and the method 400.

According to the methods provided in embodiments of this application, this application further provides a computer-readable medium. The computer-readable medium stores program code. When the program code is run on a computer, the computer is enabled to perform the method in either of embodiments of the method 300 and the method 400.

According to the method provided in embodiments of this application, this application further provides a system, including the foregoing device.

All or some of embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium. (for example, a high-density digital video disc (digital video disc, DVD)), or a semiconductor medium (for example, a solid state disk (solid state disk, SSD)), or the like.

A network side device and a terminal device in the apparatus embodiments correspond to a network side device or a terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a specific function of the unit, refer to the corresponding method embodiments. There may be one or more processors.

Terms such as "component", "module", and "system" used in this specification indicate computer-related entities, hardware, firmware, combinations of hardware and software, software, or software being executed. For example, the component may be but is not limited to a process that runs on a processor, the processor, an object, an executable file, an execution thread, a program, and/or a computer. As illustrated by using figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one place, or may be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A network transmission method, comprising:
receiving, by a first optical line terminal OLT device, a dynamic host configuration protocol DHCP message from a second OLT device, wherein the DHCP message comprises a first internet protocol IP address and a second IP address, the first IP address is an address assigned by a DHCP server to the first OLT device, the second IP address is an address of the second OLT device, the DHCP message further comprises an indication message, and the indication message indicates a tunnel packet type; and
generating, by the first OLT device, a corresponding first tunnel packet based on the indication message, wherein a source address of the first tunnel packet is the first IP address, and a destination address of the first tunnel packet is the second IP address.

2. The method according to claim 1, wherein an option field of the DHCP message comprises a third IP address and a fourth IP address, a payload part of the first tunnel packet comprises management data, a source address of the payload part is the third IP address, and a destination address of the payload part is the fourth IP address.

3. The method according to claim 1 or 2, wherein a data payload part of the first tunnel packet comprises service data, a source address of the payload part is an IP address of a device that initiates the service data, and a destination address of the payload part is an IP address of a service server corresponding to the service data.

4. The method according to any one of claims 1 to 3, wherein
the second IP address is carried in the option field of the DHCP message; or
the second IP address is carried in a server IP address field of the DHCP message; or
the second IP address is carried in a gateway IP address field of the DHCP message.

5. The method according to any one of claims 1 to 4, wherein a type of the first tunnel packet comprises an internet protocol virtual private network IP VPN tunnel packet and a multiprotocol label switching MPLS tunnel packet; and
the IP VPN tunnel packet comprises one of the following: a virtual local area network VLAN tunnel packet, a virtual extensible local area network VxLAN tunnel packet, a segment routing version SRv6 tunnel packet, and a generic routing encapsulation GRE tunnel packet.

6. The method according to any one of claims 1 to 5, wherein the indication message further comprises a parameter of the first tunnel packet; and
the parameter of the first tunnel packet is a protocol parameter corresponding to the type of the first tunnel packet, and when the tunnel packet is a VxLAN tunnel packet, a parameter of the tunnel packet comprises: a VxLAN tunnel endpoint IP address and a VxLAN network identifier VNI.

7. The method according to any one of claims 1 to 6, wherein the method further comprises:
receiving, by the first OLT device, a second tunnel packet from the second OLT device, wherein a source address of the second tunnel packet is the second IP address, and a destination address of the second tunnel packet is the first IP address;
decapsulating, by the first OLT device, the second tunnel packet, to obtain a payload part of the second tunnel packet; and
resolving, by the first OLT device, the payload part of the second tunnel packet if a destination address of the payload part of the second tunnel packet is an IP address of the first OLT device; or forwarding, by the first OLT device, the payload part of the second tunnel packet based on a destination address of the payload part of the second tunnel packet if the destination address of the payload part of the second tunnel packet is not an IP address of the first OLT device.

8. A network transmission method, comprising:
sending, by a second optical line terminal OLT device, a dynamic host configuration protocol DHCP message to a first OLT device, wherein the DHCP message comprises a first internet protocol IP address and a second IP address, the first IP address is an address assigned by a DHCP server to the first OLT device, the second IP address is an address of the second OLT device, the DHCP message further comprises an indication message, and the indication message indicates a tunnel packet type, wherein
the indication message is used by the first OLT device to generate a corresponding first tunnel packet, a source address of the first tunnel packet is the first IP address, and a destination address of the first tunnel packet is the second IP address.

9. The method according to claim 8, wherein an option field of the DHCP message comprises a third IP address and a fourth IP address, a payload part of the first tunnel packet comprises management data, a source address of the payload part is the third IP address, and a destination address of the payload part is the fourth IP address.

10. The method according to claim 8 or 9, wherein
a data payload part of the first tunnel packet comprises service data, a source address of the payload part is an IP address of a device that initiates the service data, and a destination address of the payload part is an IP address of a service server corresponding to the service data.

11. The method according to any one of claims 8 to 10, wherein
the second IP address is carried in the option field of the DHCP message; or
the second IP address is carried in a server IP address field of the DHCP message; or
the second IP address is carried in a gateway IP address field of the DHCP message.

12. The method according to any one of claims 8 to 11, wherein a type of the first tunnel packet comprises an internet protocol virtual private network IP VPN tunnel packet and a multiprotocol label switching MPLS tunnel packet; and
the IP VPN tunnel packet comprises one of the following: a virtual local area network VLAN tunnel packet, a virtual extensible local area network VxLAN tunnel packet, a segment routing version SRv6 tunnel packet, and a generic routing encapsulation GRE tunnel packet.

13. A network transmission device, comprising a transceiver unit and a processing unit, wherein
the transceiver unit is configured to receive a dynamic host configuration protocol DHCP message, wherein the DHCP message comprises a first internet protocol IP address and a second IP address, the first IP address is an address assigned by a DHCP server to a first OLT device, the second IP address is an address of a second OLT device, the DHCP message further comprises an indication message, and the indication message indicates a tunnel packet type; and
the processing unit is configured to generate a corresponding first tunnel packet based on the indication message, wherein a source address of the first tunnel packet is the first IP address, and a destination address of the first tunnel packet is the second IP address.

14. The device according to claim 13, wherein an option field of the DHCP message comprises a third IP address and a fourth IP address, a payload part of the first tunnel packet comprises management data, a source address of the payload part is the third IP address, and a destination address of the payload part is the fourth IP address.

15. The device according to claim 13 or 14, wherein
a data payload part of the first tunnel packet comprises service data, a source address of the payload part is an IP address of a device that initiates the service data, and a destination address of the payload part is an IP address of a service server corresponding to the service data.

16. The device according to any one of claims 13 to 15, wherein
the second IP address is carried in the option field of the DHCP message; or
the second IP address is carried in a server IP address field of the DHCP message; or
the second IP address is carried in a gateway IP address field of the DHCP message.

17. The device according to any one of claims 13 to 16, wherein a type of the first tunnel packet comprises an internet protocol virtual private network IP VPN tunnel packet and a multiprotocol label switching MPLS tunnel packet; and
the IP VPN tunnel packet comprises one of the following: a virtual local area network VLAN tunnel packet, a virtual extensible local area network VxLAN tunnel packet, a segment routing version SRv6 tunnel packet, and a generic routing encapsulation GRE tunnel packet.

18. A network transmission device, comprising a transceiver unit, wherein
the transceiver unit is configured to send a dynamic host configuration protocol DHCP message, wherein the DHCP message comprises a first internet protocol IP address and a second IP address, the first IP address is an address assigned by a DHCP server to a first OLT device, the second IP address is an address of a second OLT device, the DHCP message further comprises an indication message, and the indication message indicates a tunnel packet type, wherein
the indication message is used by the first OLT device to generate a corresponding first tunnel packet, a source address of the first tunnel packet is the first IP address, and a destination address of the first tunnel packet is the second IP address.

19. The device according to claim 18, wherein an additional option field of the DHCP message comprises a third IP address and a fourth IP address, a payload part of the first tunnel packet comprises management data, a source address of the payload part is the third IP address, and a destination address of the payload part is the fourth IP address.

20. The device according to claim 18 or 19, wherein
a data payload part of the first tunnel packet comprises service data, a source address of the payload part is an IP address of a device that initiates the service data, and a destination address of the payload part is an IP address of a service server corresponding to the service data.

21. The device according to any one of claims 18 to 20, wherein
the second IP address is carried in the option field of the DHCP message; or
the second IP address is carried in a server IP address field of the DHCP message; or
the second IP address is carried in a gateway IP address field of the DHCP message.

22. The device according to any one of claims 18 to 21, wherein a type of the first tunnel packet comprises an internet protocol virtual private network IP VPN tunnel packet and a multiprotocol label switching MPLS tunnel packet; and
the IP VPN tunnel packet comprises one of the following: a virtual local area network VLAN tunnel packet, a virtual extensible local area network VxLAN tunnel packet, a segment routing version SRv6 tunnel packet, and a generic routing encapsulation GRE tunnel packet.

23. The device according to any one of claims 18 to 22, wherein
the transceiver unit is further configured to receive a second tunnel packet, wherein a source address of the second tunnel packet is the first IP address, and a destination address of the second tunnel packet is the second IP address;
the processing unit is configured to decapsulate the second tunnel packet, to obtain a payload part of the second tunnel packet; and
the processing unit is configured to resolve the payload part of the second tunnel packet if a destination address of the payload part of the second tunnel packet is an IP address of the second OLT device; or the processing unit is configured to forward the payload part of the second tunnel packet based on a destination address of the payload part of the second tunnel packet if the destination address of the payload part of the second tunnel packet is not an IP address of the second OLT device.

24. A network transmission device, comprising at least one processor, wherein the at least one processor is configured to execute a computer program stored in a memory, so that the device implements the method according to any one of claims 1 to 7 or claims 8 to 12.
